# EUROPEAN PATENT APPLICATION

(11) **EP 4 539 203 A1**
(43) Date of publication of application: **16.04.2025**
(21) Application number: 24203444.5
(22) Date of filing: 30.09.2024
(51) Int. Cl.: H01M 10/48, H01M 50/342, H01M 50/358

(54) **THERMAL RUNAWAY EARLY WARNING METHOD IN POWER BATTERY SYSTEM, ELECTRONIC DEVICE, AND STORAGE MEDIA**

(30) Priority: 11.10.2023 CN 202311317163; 19.07.2024 WO PCT/CN2024/106462
(71) Applicant: Eve Energy Co., Ltd., Huizhou, Guangdong 516006 (CN)
(72) Inventor: DONG, Yunpeng, Huizhou, Guangdong, 516006 (CN)
(74) Representative: Murgitroyd & Company

(57) **Abstract**

The present application provides a thermal runaway warning method, an electronic device, and a storage medium in a power battery system. The power battery system (35) includes a plurality of battery cells and a pressure relief channel. The pressure relief channel is used for pressure relief protection of the battery cells. The thermal runaway warning method includes: acquiring a target gas content in the pressure relief channel; determining whether a thermal runaway event is occurred based on the target gas content; and outputting a thermal runaway warning signal, when the thermal runaway event is determined occurring.

## Description

### TECHNICAL FIELD

The present application relates to a technical field of power battery systems, and in particular, to a thermal runaway early warning method in a power battery system, an electronic device, and a storage media.

### BACKGROUND

As the number of new energy vehicles increases, the number of mass-produced power battery systems is also increasing. The mass-produced power battery system has safety risks such as thermal runaway, which will have an impact on a sustainable development of a new energy automobile industry. Therefore, safety of the mass-produced power battery system is very important for the sustainable development of the new energy automobile industry.

### SUMMARY

However, when a thermal runaway may occur in the power battery system of an automobile, it is often impossible to warn the thermal runaway in a timely manner, resulting in an inability to promptly notify users to quickly stay away from the automobile and ensure safety of users.

This present application provides a thermal runaway early warning method in a power battery system. The power battery system includes a plurality of battery cells and a pressure relief channel. The pressure relief channel is used for pressure relief protection of the battery cells. The thermal runaway early warning method includes:
acquiring a target gas content in the pressure relief channel;
determining whether a thermal runaway event is occurred based on the target gas content; and
outputting a thermal runaway warning signal, when the thermal runaway event is determined occurring.

The present application also provides an electronic device, which is used to execute steps in the thermal runaway early warning method in the power battery system.

This present application also provides a storage medium on which a software program is stored, and software programs are loaded by the electronic device to execute the steps in the thermal runaway early warning method in the power battery system.

In this present application, by acquiring the target gas content in the pressure relief channel, and determining whether a thermal runaway event is occurred based on the target gas content, thereby executing a thermal runaway warning, thereby making the warning of the thermal runaway more rapid and accurate.

### BRIEF DESCRIPTION OF THE DRAWINGS

FIG. 1 is a schematic flowchart of a thermal runaway early warning method in a power battery system provided by a possible embodiment of the present application.
FIG. 2 is another schematic flowchart of the thermal runaway early warning method in the power battery system provided by a possible embodiment of the present application.
FIG. 3 is a schematic structural diagram of a vehicle in the power battery system provided by a possible embodiment of the present application.

### Description of reference numbers:

30. vehicle; 31. third sensor; 32. first sensor; 33. battery management system; 34. vehicle controller; 35. Power battery system; 36. vehicle center console.

### DETAILED DESCRIPTION

In this present application, unless otherwise specified, directional words used such as "upper" and "lower" usually refer to an upper position and a lower position of a device in actual use or working state, which specifically expresses a direction in the drawings. But "inside" and "outside" refer to the outline of the device.

In order to make the warning of the thermal runaway more rapid and accurate, some possible embodiments of the present application provide a thermal runaway early warning method in a power battery system, an electronic device, and a storage medium. By acquiring a content of a target gas in the pressure relief channel, and determining whether a thermal runaway event is occurred based on the target gas content, thereby executing a thermal runaway warning, thereby making the warning of the thermal runaway more rapid and accurate. Please refer to the detailed description for specific solutions.

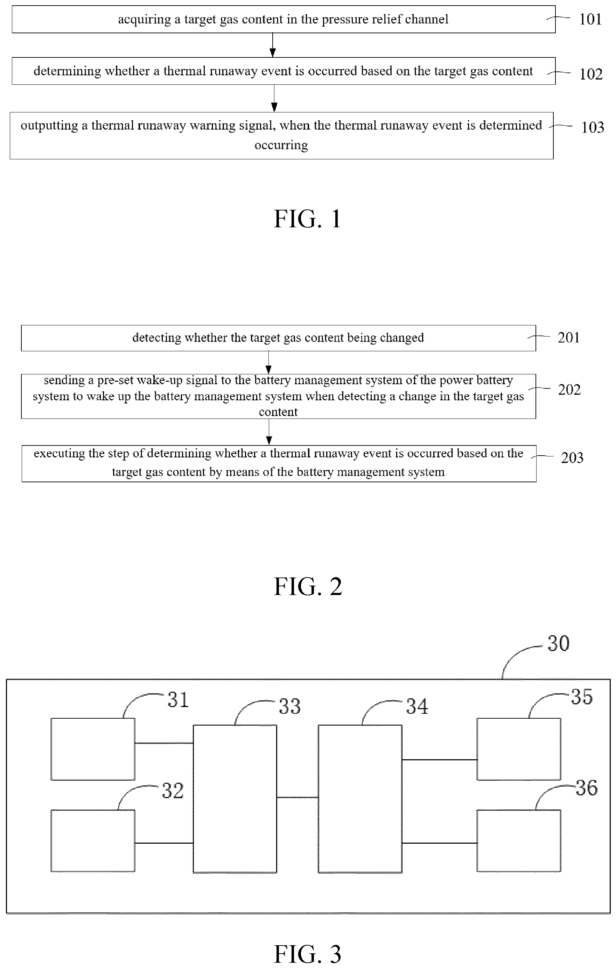

Please refer to FIG. 1, FIG. 1 is a schematic flowchart of a thermal runaway early warning method in a power battery system provided by a possible embodiment of the present application. The thermal runaway early warning method includes following steps.

Step 101, acquiring a target gas content in the pressure relief channel.

In some possible embodiments of the present application, firstly, a structure of the power battery system will be described. In the power battery system, there are a plurality of battery cells and a pressure relief channel. The pressure relief channel is used for pressure relief protection of the plurality of the battery cells. The plurality of the battery cells are generally cylindrical battery cells. The plurality of the battery cells are connected in parallel to form a battery module. The battery module further includes a tray. A pressure relief hole is provided in the tray. The plurality of the battery cells are arranged on the tray. An explosion-proof valve for pressure relief protection is arranged at a bottom of the plurality of the battery cells. The explosion-proof valve is directly opposite to the pressure relief hole. The explosion-proof valve is connected to the pressure relief channel through the pressure relief hole. The pressure relief channel is connected to the pressure relief valve. The pressure relief valve is connected to outside world. When the plurality of the battery cells are subjected to pressure relief protection, air pressure inside the plurality of the battery cells rises sharply, and high-pressure gas inside the plurality of the battery cells forces the explosion-proof valve to open, so that the high-pressure gas inside the plurality of the battery cells is discharged to the pressure relief channel through the pressure relief hole, and then discharged to the outside world through the pressure relief valve to realize the pressure relief protection of the plurality of the battery cells.

One or more first sensors are pre-arranged in the pressure relief channel. The first sensor is used to collect the target gas content in the pressure relief channel. The target gas is generally hydrogen. In some possible embodiments of the present application, the target gas may also be carbon monoxide, and in other possible embodiments of the present application, the target gas may also be hydrogen and carbon monoxide. Taking the target gas as hydrogen as an example, the first sensor may be a hydrogen sensor. The hydrogen sensor can detect the content of the hydrogen. The content of the hydrogen is generally a percentage value. Taking the target gas as carbon monoxide as an example, the first sensor may be a carbon monoxide sensor. The carbon monoxide sensor can detect the content of the carbon monoxide. The content of the carbon monoxide is generally a percentage value. Taking hydrogen and carbon monoxide as the target gas as an example, the first sensor may be a hydrogen sensor or a carbon monoxide sensor. In this case, the target gas content is at least one of the content of the hydrogen and the content of the carbon monoxide.

Step 102, determining whether a thermal runaway event is occurred based on the target gas content.

In some possible embodiments of the present application, when the thermal runaway event is occurred in the power battery system, the target gas content in the pressure relief channel generally changes to a certain extent, so whether the thermal runaway event occurs can be determined based on the certain extent. For example, the thermal runaway event can be determined having occurred when the target gas content is greater than a pre-set content. As another example, the thermal runaway event can be determined having occurred when a duration in which the target gas content being greater than the pre-set content is greater than a fourth pre-set duration.

In some possible embodiments of the present application, the step 102 may include: determining whether a pre-set gas content condition is satisfied based on the target gas content; determining whether a first condition combination is satisfied within a first pre-set duration, if a pre-set gas content condition is satisfied; and determining whether a thermal runaway event is occurred according to a determination on whether the first condition combination is satisfied within the first pre-set duration. For example, it is determined that the thermal runaway event is occurred if the first condition combination is satisfied within the first pre-set duration. The pre-set gas content condition may be set based on an actual change of the target gas content in the pressure relief channel when the thermal runaway event occurs in the power battery system. The first condition combination includes at least a pre-set gas content condition, and the first condition combination may further include other pre-set conditions, which are not limited herein; and determining whether the thermal runaway event occurs according to a determination on whether the first condition combination is satisfied within the first pre-set duration. For example, it is determined that the thermal runaway event is occurred if the first condition combination is satisfied within a first pre-set duration.

In some possible embodiments of the present application, the step 102 may include: determining a pre-set channel air pressure condition is satisfied if the duration in which the target gas content being greater than the pre-set content is greater than or equal to the fourth pre-set duration; and determining the pre-set channel air pressure condition is not satisfied, if the duration in which the target gas content being greater than the pre-set content is less than the fourth pre-set duration. In some possible embodiments of the present application, taking the pre-set content of 1% and the pre-set duration of 500 milliseconds as an example, it is determined that a pre-set channel air pressure condition is satisfied if the duration in which the target gas content is greater than 1% is greater than or equal to 500 milliseconds. It should be noted that the target gas content is smaller than the pre-set content is also one of the cases in which the duration in which the target gas content being larger than the pre-set content is smaller than the pre-set duration.

In some possible embodiments of the present application, the first condition combination may include at least one of following conditions in addition to the pre-set gas content condition, for example:
Condition A: indicating that cell temperature rises rapidly. That is, there are battery cells whose temperature rising amplitude is greater than a pre-set value within a fifth pre-set duration in the power battery system. For example, the fifth pre-set duration can be taken as 5 seconds. For example, the pre-set value can be taken as 2 °C.
Condition B: indicating that a cell voltage is extremely low. That is, there are battery cells in the power battery system whose voltage is less than a pre-set voltage and the duration is greater than a sixth pre-set duration. For example, the pre-set voltage can be taken as 2 volts, and for example, the sixth pre-set duration can be taken as 3 seconds.
Condition C: indicating that a cell temperature difference is extremely large. That is, a duration in which a first temperature difference being greater than or equal to a first threshold and a second temperature difference is greater than a second threshold, is greater than or equal to a seventh pre-set duration. The first temperature difference is a temperature difference between a maximum temperature and a minimum temperature among temperatures of the plurality of the battery cells in the power battery system. The second temperature difference is a temperature difference between a maximum temperature among the temperatures of the plurality of the battery cells in the power battery system and an average battery cell temperature of the plurality of the battery cells in the power battery system. The first threshold value is greater than the second threshold value. For example, the first threshold value may be 25 °C. For example, the second threshold value may be taken as 15 °C. For example, the seventh pre-set duration may be taken as 2 seconds.
Condition D: indicating that the cell temperature is extremely high. That is, the maximum temperature among the temperatures of the plurality of the battery cells in the power battery system is greater than a temperature threshold. For example, the temperature threshold may be taken as 65 °C;
Condition E: indicating the cell voltage drops rapidly. That is, there are battery cells whose percentage of a voltage fall amplitude of the cell voltage within an eighth pre-set duration is greater than or equal to a pre-set percentage in the power battery system. For example, the eighth pre-set duration may be taken as 5 seconds. For example, the pre-set percentage may be taken as 25%.
Condition F: indicating that cell voltage collection is abnormal. That is, there are battery cells having a cell voltage that collects abnormally in the power battery system.
Condition G: indicating that collection of the cell temperature is abnormal. That is, there are battery cells having a cell temperature that collects abnormally in the power battery system;
Condition H: indicating an insulation fault. That is, the insulation fault in the power battery system is detected, and the insulation fault may be detected by a balanced bridge method, an unbalanced bridge method, and other methods.
Condition K: indicating that a channel temperature is risen rapidly, that is, the condition K is a pre-set channel temperature condition.
Condition L: indicating that a channel air pressure is extremely high. That is, the condition L is the pre-set channel air pressure condition.

In some possible embodiments of the present application, taking at least one of the pre-set channel temperature condition and the pre-set channel air pressure condition further included in the first condition combination as an example. It is determined whether the first condition combination is satisfied within a first pre-set duration when the pre-set gas content condition is satisfied, which may include any one or a combination of two of following cases. In a first case, when the pre-set gas content condition is satisfied, it is determined whether the pre-set channel temperature condition is satisfied based on the channel temperature in the pressure relief channel. In a second case, when the pre-set gas content condition is satisfied, it is determined whether the pre-set channel air pressure condition is satisfied based on the channel air pressure in the pressure relief channel. When the pre-set gas content condition is satisfied, it is determined whether the first condition combination is satisfied within the first pre-set duration according to whether at least one of the pre-set channel temperature condition and the pre-set channel air pressure condition is satisfied. For example, when the first condition combination includes the pre-set gas content condition and the pre-set channel temperature condition, if the pre-set gas content condition and the pre-set channel temperature condition are satisfied within the first pre-set duration, it is determined that the first condition combination is satisfied within the first pre-set duration. For example, when the first condition combination includes the pre-set gas content condition and the pre-set channel air pressure condition, if the pre-set gas content condition and the pre-set channel air pressure condition are satisfied within the first pre-set duration, it is determined that the first condition combination is satisfied within the first pre-set duration. For example, when the first condition combination includes a pre-set gas content condition, a pre-set channel temperature condition, and a pre-set channel air pressure condition, if the pre-set gas content condition, the pre-set channel temperature condition, and the pre-set channel air pressure condition are satisfied within the first pre-set duration, it is determined that the first condition combination is satisfied within the first pre-set duration to make the judgment of the thermal runaway event to be more accurate and timely.

The pressure relief channel may also be provided with a second sensor. The second sensor is pre-set and used to collect the channel temperature in the pressure relief channel. The second sensor is generally a temperature sensor, such as an NTC sensor (Negative Temperature Coefficient Sensor). The pressure relief channel may also be provided with a third sensor for collecting channel air pressure in the pressure relief channel, and the third sensor is pre-set and generally a pressure sensor, such as a boost pressure sensor (BPS).

The pre-set channel temperature condition may be set based on an actual change of the channel temperature in the pressure relief channel when a thermal runaway event occurs in the power battery system. For example, the determining of whether the channel temperature in the pressure relief channel is satisfied with a pre-set channel temperature condition, may include: detecting whether the channel temperature rises; determining the pre-set channel temperature condition being satisfied, if the rising amplitude of the channel temperature within a second pre-set duration is greater than or equal to a pre-set amplitude during the rising of the channel temperature; and determining the pre-set channel temperature condition being not satisfied, if the rising amplitude of the channel temperature within the second pre-set duration is less than the pre-set amplitude. Taking the second pre-set duration of 3 seconds and the pre-set amplitude of 3 °C as an example, if the rising amplitude of the channel temperature within 3 seconds is greater than or equal to 3 °C, it is determined that the pre-set channel temperature condition is satisfied. It is noted that a case that the channel temperature does not rise is also one of the cases in which the rising amplitude of the channel temperature within the second pre-set duration is smaller than the pre-set amplitude.

The pre-set channel air pressure condition may be set based on an actual change of the channel air pressure in the pressure relief channel when a thermal runaway event occurs in the power battery system, and is not limited herein. The determining of whether the channel air pressure in the pressure relief channel is satisfied with a pre-set channel air pressure condition may include: acquiring a plurality of historical channel air pressures within a pre-set historical time period and determining a barometric pressure threshold based on the plurality of the historical channel barometric pressures; determining the pre-set channel air pressure condition being satisfied, if a duration in which the channel air pressure being greater than or equal to the air pressure threshold value is greater than or equal to the third pre-set duration; and determining the pre-set channel air pressure condition being not satisfied, if a duration in which the channel air pressure being greater than or equal to the air pressure threshold value is less than the third pre-set duration. The pre-set historical time period is generally a historical time period closest to a current time point. For example, the pre-set historical time period is the closest historical time period of 10 seconds to the current time point. Specifically, the air pressure threshold value may be determined based on an average value of the air pressure of the plurality of the historical channels. For example, the air pressure threshold value may be obtained by adding a certain air pressure error value to the average value of the air pressure of the plurality of the historical channels. The air pressure error value may be, for example, 4 kilopascals (kPa). The third pre-set duration may be, for example, 200 milliseconds. It is noted that a case that the channel air pressure is less than the air pressure threshold value is also one of the cases in which a duration of the channel air pressure being greater than or equal to the air pressure threshold value is less than the third pre-set duration

In some possible embodiments of the present application, because only a part of indexes often changes obviously, while another part of the indexes does not change or change slightly when a thermal runaway event occurs in a power battery system. For example, the indexes changed include the channel air pressure and the target gas content, while the channel temperature does not change or changes slightly. Therefore, based on an actual situation, the pre-set channel temperature condition, the pre-set channel air pressure condition, the pre-set gas content condition, and the like may be combined to obtain a collection of a plurality of condition combinations. It is determined whether a thermal runaway event is occurred based on the plurality of the condition combinations. For example, it is determined that a thermal runaway event is occurred as long as one condition combination of the plurality of the condition combinations is satisfied. Specifically, determining whether a thermal runaway event occurs according to a determination on whether a first condition combination is satisfied within the first pre-set duration, may include: acquiring a pre-set condition combination collection, wherein the plurality of condition combinations in the pre-set condition combination collection include the first condition combination; determining whether at least one condition combination in the pre-set condition combination collection is satisfied according to a determination on whether the first condition combination is satisfied within the first pre-set duration; and determining whether a thermal runaway event is occurred according to whether at least one condition combination in the pre-set condition combination collection is satisfied.

The following illustrates a plurality of condition combinations in the pre-set condition combination collection. The pre-set condition combination collection may include at least one of the following condition combinations.

**[Table 1 _ sm _ 0001]**

| The pre-set condition combination collection | Description |
|---|---|
| Conditions A + B + C | The cell temperature rises rapidly, the cell voltage is extremely low, and the cell temperature difference is extremely large |
| Conditions A + B + D | The cell temperature rises rapidly, the cell voltage is extremely low, and the cell temperature is extremely high |
| Conditions A + B + E | The cell temperature rises rapidly, the cell voltage is extremely low, and the cell voltage drops rapidly |
| Conditions A + C + E | The cell temperature rises rapidly, the cell temperature difference is extremely large, and the cell voltage drops rapidly |
| Conditions A + C + F | The cell temperature rises rapidly, the cell temperature difference is extremely large, and the cell voltage collection is abnormal |
| Conditions A + D + E | The cell temperature rises rapidly, the cell temperature is extremely high, and the cell voltage drops rapidly |
| Conditions A + D + F | The cell temperature rises rapidly, the cell temperature is extremely high, and the cell voltage collection is abnormal |
| Conditions B + C + D | The cell voltage is extremely low, the cell temperature difference is extremely large, and the cell temperature is extremely high |
| Conditions B + C + F | The cell voltage is extremely low, the cell temperature difference is extremely large, and the cell voltage collection is abnormal |
| Conditions B + D + E | The cell voltage is extremely low, the cell temperature is extremely high, and the cell voltage drops rapidly |
| Conditions B + E + G | The cell voltage is extremely low, the cell voltage drops rapidly, and the collection of the cell temperature is abnormal |
| Conditions C + D +E | The cell temperature difference is extremely large, and the cell temperature is extremely high, and the cell voltage drops rapidly |
| Conditions C + D + F | The cell temperature difference is extremely large, and the cell temperature is extremely high, and the cell voltage collection is abnormal |
| Conditions H + K | the insulation fault and the channel temperature is risen rapidly |
| Conditions H + L + N | The insulation fault, the channel air pressure is extremely high, and target gas content is high |
| Conditions A + D + L | The cell temperature rises rapidly, the cell temperature is extremely high, and the channel air pressure is extremely high |
| Conditions F + H + N | The cell voltage collection is abnormal, the insulation fault, and target gas content is high, and the target gas content is high |
| Conditions K + L + N | The channel temperature is risen rapidly, the channel air pressure is extremely high, and the target gas content is high |

The condition N is the pre-set gas content condition.

Step 103, outputting a thermal runaway warning signal, when the thermal runaway event is determined occurring.

In some possible embodiments of the present application, referring to FIG. 3, a vehicle 30 located in the power battery system includes a third sensor 31, a first sensor 32, a battery management system 33, a vehicle controller 34, a power battery system 35, and a vehicle center console 36. The third sensor 31 and the first sensor 32 are both pre-set. The third sensor 31 and the first sensor 32 are respectively communicatively connected to the battery management system 33. The battery management system 33 is communicatively connected to the vehicle controller 34. The vehicle controller 34 is respectively connected to the power battery system 35 and the vehicle center console 36.

In some possible embodiments of the present application, when a thermal runaway event is determined to occur, a thermal runaway warning signal is output. Specifically, the battery management system 33 transmits a thermal runaway warning signal to the vehicle controller 34 to cause the vehicle controller 34 to execute a pre-set thermal runaway process. For example, the pre-set thermal runaway process includes that the vehicle controller 34 may transmit thermal runaway warning prompt information to the vehicle center console 36 to output thermal runaway warning prompt information to vehicle users through the vehicle center console 36 to remind the vehicle users to evacuate as soon as possible. Output modes of the thermal runaway warning prompt information may be an audible and visual alarm, or the like. The vehicle controller 34 may also send a cooling instruction to a thermal management system (TMS) in the vehicle 30 to make the thermal management system to perform cooling processing on the power battery system 35. The vehicle controller 34 may also send a vehicle information upload instruction to a vehicle-mounted T-BOX in the vehicle 30, so that the vehicle-mounted T-BOX sends vehicle information to a pre-set server for subsequent viewing and analysis of the thermal runaway event based on the vehicle information. The vehicle information includes various indicators in the power battery system 35. For example, the various indicators may be the cell temperature, the cell voltage, the channel temperature in the pressure relief channel, the channel air pressure, the target gas content, etc.

In some possible embodiments of the present application, since the battery management system 33 and the vehicle controller 34 may be in an idle state when the vehicle 30 is stopped, and the thermal runaway warning cannot be executed. As shown in FIG. 2, after acquiring the target gas content in the pressure relief channel, the thermal runaway early warning method may further include following steps. Step 201, detecting whether the target gas content being changed. Step 202, sending a pre-set wake-up signal to the battery management system 33 of the power battery system to wake up the battery management system 33 when detecting a change in the target gas content. Specifically, when the first sensor 32 detects a change in the target gas content, it indicates that a thermal runaway event may occur, so the first sensor 32 may send a pre-set wake-up signal to the battery management system 33 of the power battery system to wake up the battery management system 33. The pre-set wake-up signal may be a hard-wire signal or a controller area network (CAN) signal. Step 203: executing the step of determining whether a thermal runaway event is occurred based on the target gas content by means of the battery management system 33. Specifically, after the battery management system 33 is awakened, the step 102 and the subsequent steps thereof can be executed. The vehicle controller 34 in the idle state can be awakened, so that the warning of thermal runaway can be realized even when the vehicle 30 is stopped.

In some possible embodiments of the present application, since the battery management system 33 and the vehicle controller 34 may be in an idle state when the vehicle 30 is stopped, and a thermal runaway warning cannot be executed. The thermal runaway early warning method of the power battery system may further include: detecting whether the channel air pressure changes. When a change in the channel air pressure is detected, a pre-set wake-up signal is transmitted to the battery management system 33 of the power battery system to wake up the battery management system 33. Specifically, when the third sensor 31 detects a change in the channel air pressure, it indicates that a thermal runaway event may occur, so the third sensor 31 may send a pre-set wake-up signal to the battery management system 33 of the power battery system to wake up the battery management system 33. The pre-set wake-up signal may be a hard-wire signal or a CAN signal. When the battery management system 33 executes the step 102 and the subsequent steps, specifically, after the battery management system 33 is awakened, the step 102 and the subsequent steps can be executed, and the vehicle controller 34 in the idle state can be awakened, so that the warning of thermal runaway can be realized even when the vehicle 30 is stopped.

In some possible embodiments of the present application, due to use of the power battery system 35 during charging or traveling of the vehicle 30, thermal runaway risk may be increased. Therefore, when it is determined that the thermal runaway event is occurred, after outputting the thermal runaway warning signal, the battery management system 33 may further include sending a forcing power-down instruction of the power battery system to the vehicle controller 34 of the vehicle 30 in which the power battery system 35 is located, so that the vehicle controller 34 controls the power battery system 35 to perform the forcing power-down process. It should be noted that the forcing power-down instruction means that the power-down operation is performed immediately to avoid an increase in the thermal runaway risk.

In some possible embodiments of the present application, the present application further includes an electronic device. The electronic device may include the third sensor 31, the first sensor 32, and the battery management system 33 in FIG. 3. The electronic device is configured to perform any one of the steps of the thermal runaway warning method in the power battery system.

In some possible embodiments of the present application, the present application further includes a storage media. The storage media may be non-volatile or volatile. Software programs are stored on the storage medium. The software programs are loaded by the electronic device to perform any one of the steps in the thermal runaway warning method in the power battery system.

## Claims

1. A thermal runaway early warning method in a power battery system, the power battery system comprising a plurality of battery cells and a pressure relief channel, the pressure relief channel being used for pressure relief protection of the battery cells, and the thermal runaway early warning method being **characterized in** comprising:
acquiring a target gas content in the pressure relief channel;
determining whether a thermal runaway event is occurred based on the target gas content; and
outputting a thermal runaway warning signal, when the thermal runaway event is determined occurring.

2. The thermal runaway early warning method according to claim 1, wherein the step of the determining whether a thermal runaway event is occurred based on the target gas content comprises:
determining whether a pre-set gas content condition is satisfied based on the target gas content;
determining whether a first condition combination is satisfied within a first pre-set duration when a pre-set gas content condition is satisfied; wherein the first condition combination comprises at least a pre-set gas content condition; and
determining whether a thermal runaway event is occurred according to a determination on whether the first condition combination is satisfied within the first pre-set duration.

3. The thermal runaway early warning method according to claim 2, wherein the step of the determining whether a first condition combination is satisfied within a first pre-set duration based on a pre-set gas content condition is satisfied comprises:
determining whether the first condition combination is satisfied within the first pre-set duration according to whether at least one of a pre-set channel temperature condition and a pre-set channel air pressure condition is satisfied, when the first condition combination further comprising at least one of the pre-set channel temperature condition and the pre-set channel air pressure condition.

4. The thermal runaway early warning method according to claim 3, wherein when the pre-set gas content condition is satisfied, it is to determine whether the pre-set channel temperature condition is satisfied based on a channel temperature in the pressure relief channel.

5. The thermal runaway early warning method according to claim 3 or claim 4, wherein when the pre-set gas content condition is satisfied, it is to determine whether the pre-set channel air pressure condition is satisfied based on a channel air pressure in the pressure relief channel.

6. The thermal runaway early warning method according to claim 1, wherein the target gas content is at least one of a hydrogen content and a carbon monoxide content.

7. The thermal runaway early warning method according to claim 4, wherein the step of determining whether the pre-set channel temperature condition is satisfied is based on a channel temperature in the pressure relief channel comprises:
detecting whether the channel temperature rises;
determining the pre-set channel temperature condition being satisfied, if the rising amplitude of the channel temperature within a second pre-set duration is greater than or equal to a pre-set amplitude during the rising of the channel temperature; and
determining the pre-set channel temperature condition being not satisfied, if the rising amplitude of the channel temperature within the second pre-set duration is less than the pre-set amplitude.

8. The thermal runaway early warning method according to claim 5, wherein the step of determining whether the pre-set channel air pressure condition is satisfied is based on a channel air pressure in the pressure relief channel comprises:
acquiring a plurality of historical channel air pressures within a pre-set historical time period;
determining a barometric pressure threshold based on the plurality of the historical channel barometric pressures;
determining the pre-set channel air pressure condition being satisfied, if a duration in which the channel air pressure being greater than or equal to the air pressure threshold value is greater than or equal to the third pre-set duration; and
determining the pre-set channel air pressure condition being not satisfied, if a duration in which the channel air pressure being greater than or equal to the air pressure threshold value is less than the third pre-set duration.

9. The thermal runaway early warning method according to any one of claims 2 to 8, wherein the step of determining whether a pre-set gas content condition is satisfied based on the target gas content comprises:
determining a pre-set channel air pressure condition being satisfied if a duration in which the target gas content being greater than the pre-set content is greater than or equal to a fourth pre-set duration; and
determining the pre-set channel air pressure condition being not satisfied, if the duration in which the target gas content being greater than the pre-set content is less than the fourth pre-set duration.

10. The thermal runaway early warning method according to any one of claims 2 to 8, wherein the step of determining whether a thermal runaway event is occurred according to whether the first condition combination is satisfied within the first pre-set duration comprises:
acquiring a pre-set condition combination collection, wherein a plurality of condition combinations in the pre-set condition combination collection comprise the first condition combination;
determining whether at least one of the condition combinations in the pre-set condition combination collection is satisfied according to whether the first condition combination is satisfied within the first pre-set duration; and
determining whether a thermal runaway event is occurred according to whether at least one of the condition combinations in the pre-set condition combination collection is satisfied.

11. The thermal runaway early warning method according to any one of claims 1 to 8, wherein after the step of acquiring the target gas content in the pressure relief channel, the thermal runaway early warning method further comprises:
detecting whether the target gas content is changed;
sending a pre-set wake-up signal to a battery management system (33) of the power battery system (35) to wake up the battery management system (33), when it has been detected a change in the target gas content; and
executing the step of determining whether a thermal runaway event is occurred based on the target gas content by means of the battery management system (33).

12. The thermal runaway early warning method according to any one of claims 1 to 8, wherein after the step of outputting a thermal runaway warning signal, when the thermal runaway event is determined occurring, the thermal runaway early warning method further comprises:
sending a forcing power-down instruction of the power battery system (35) to a vehicle controller (34) of a vehicle (30) at which the power battery system (35) is located to make the vehicle controller (34) to control the power battery system (35) to perform the forcing power-down process.

13. The thermal runaway early warning method according to any one of claims 1 to 8, wherein when a vehicle (30) is stopped, a thermal runaway warning cannot be executed because a battery management system (33) and a vehicle controller (34) of the vehicle (30) are in an idle state, and the thermal runaway early warning method further comprises:
detecting a change of a channel air pressure in the pressure relief channel;
transmitting a pre-set wake-up signal to the battery management system (33) of the power battery system (35) to wake up the battery management system (33), when a change in the channel air pressure is detected.

14. An electronic device, configured to perform steps in the thermal runaway early warning method in any one of claims 1 to 13.

15. A storage media, having stored thereon software programs, wherein the software programs are loaded by an electronic device and configured to perform steps in the thermal runaway warning method in any one of claims 1 to 13.
